Europäisches Patentamt

(19) European Patent Office

Office européen des brevets

(11) Publication number: **0 050 896**

**A1**

# (12) EUROPEAN PATENT APPLICATION

(21) Application number: **81201155.9**

(22) Date of filing: **20.10.81**

(51) Int. Cl.³: **H 01 B 7/28**
**H 01 B 7/34**

(30) Priority: **27.10.80 IT 2559280**

(43) Date of publication of application:
**05.05.82 Bulletin 82/18**

(84) Designated Contracting States:
**AT BE CH DE FR GB LI LU NL SE**

(71) Applicant: **CISE- Centro Informazioni Studi Esperienze S.p.A.**
**Via Carducci, 14**
**I-20123 Milano(IT)**

(72) Inventor: **Adorni, Napoleone**
**Via G.B. Tiepolo, 7**
**I-20129 Milano(IT)**

(72) Inventor: **Parmeggiani, Aldo**
**Via Amadeo, 46**
**I-20133 Milano(IT)**

(74) Representative: **Faraggiana, Vittorio et al,**
**Ing. Barzanò & Zanardo S.P.A. Via Borgonuovo, 10**
**I-20121 Milano(IT)**

(54) **Impervious single-conductor or plural-conductor cable for use in aggressive environments at high temperatures.**

(57) The invention relates to an electric cable resistant to aggressive environments, also in the presence of high temperatures, wherein an electric insulation made of mineral fibres or other materials resistant to high temperatures is combined with an external tubular metallic sheath which is oxidation-resistant and impervious to fluid flow.

EP 0 050 896 A1

# IMPERVIOUS SINGLE-CONDUCTOR OR PLURAL-CONDUCTOR CABLE FOR USE IN AGGRESSIVE ENVIRONMENTS AT HIGH TEMPERATURES . -

-------------------

This invention aims to suggesting a solution to the problem of providing an electric cable which is flexible and can be manufactured in length over one kilometer and which can be used also under very critical environmental conditions, more particularly in environments which are at high temperatures and which are aggressive for the ordinary electric cables.

Environmental conditions of the kind referred to above can be found, for example, in geothermic wells.

It is known to protect electric cables from the external environment by a metal sheathing which forms a continuous coating therearound. Such a technology is more particularly adopted for the manufacture of coaxial cables.

The adherence of the sheath to the conductor bundle can be obtained by corrugating the sheath and then by originating a decrease of the internal diameter thereof.

The cables suggested by the conventional art are not adapted to withstand the heat and the chemical stresses which should be forecast for the particular applications indicated above: it is required, in fact, that the cable does not suffer any damage not even for temperatures over 400°C, in an environment which is both moist and aggressive.

According to the invention it is possible to solve such a problem by forming a cable comprising one or more metallic conductors around which an electrically insulating layer is formed, which is composed of a mineral coating or anyhow a coating resistant to the working temperatures, the conductor bundle being held within a metallic tube welded longitudinally.

The cable according to the invention is manufactured with advantage by insulating the metallic conductors with a glass or quartz fibre or with a mica web on the glass fabric, or with a polyimide tape.

These substances are adapted to withstand the high temperatures indicated above without impairing the inherent dielectric properties of said materials and without having to complain any softening or cracking phenomena of the kind which could be forecast with the use of the plastics or elastomeric materials conventionally used for insulating the conventional cables, provided that a protection against the external environment be provided.

The manufacture of the cable requires that the metal tube is formed and welded longitudinally around the cables themselves: it is possible, in fact, to make provisions for having the conductors slipped into a preformed tube when the cable length is considerable.

The dielectric wear and the pulling force on the conductors to overcome friction would be an unsurmontable hindrance.

Conversely, a fair friction between the insulated conductors and the outer tube might be an asset for holding the conductors in place, so that they can be freely placed the ones alongside the others or even twisted together and possibly reinforced with armouring wires.

The high resistance to temperature, which is the characteristic of the materials used for insulation, permits, moreover, that a longitudinal welding of the tubular sheath may be made with an even minimal gap between the tube and the conductors.

Upon forming the tube around the conductors, the tube can be subjected to rolling for immobilizing the insulated conductors and for correcting the cylindrical outline of the tube cross-section.

The tube is adapted for being connected to the apparatus which are to be fed by the conductors, with the same technology as is adopted for connecting the fluid-impervious tubes, the sealtightness of the junctions being properly assured.

The nature of the metallic material forming the outer tube for the cable is not eminently critical : the tube must be welded and it must be adapted to withstand high temperatures and corrosion.

Stainless steel has proven to be suitable for many conditions of use.

The longitudinal welding seam can be made by butt

4.

weld, or with partial overlapping or with any other appropriate technology.

The tube can also be made in two half-shells, instead of a single metal tape, possibly to form also more tubes gauged parallely wherever this is required for necessity of practical use.

The tubes may have diametral sizes in the order of a few millimetres, the thickness being of a few tenths of one millimetre.

The small tubes of that kind may also be twisted together, also in union to metal wires, with the same procedures and with the same advantages which are known for the cables having an organic dielectric.

It has been ascertained that the combination of the use of the insulation coating with materials adapted to high temperatures, but inapt to withstand fluids, such as mineral fibres, or which do not withstand high temperatures and oxidation simultaneously, such as polyimide resins, with the adoption of an external tubular stainless metallic sheathing, has permitted that cables may be obtained which have characteristics of resistance to the environment which were unknown heretofore to the cables prepared according to the conventional art.

Also the cables with a metallic tube with mineral insulation as produced at present, which are none-the-less usable under the same environmental conditions recalled above, on account of the method whereby they are manufactured, that is, extrusion, can be furnished in short sections only, that is about 100 metres, contrary to what occurs with the cable suggested herein, which can be produced in virtually unlimited lengths.

Formal changes to the invention as described above can be adopted, obviously, by a skilled practitioner to adapt the product to the specific requirements imposed by the final use, but without departing thereby from the scope of this invention.

1.

C L A I M . -

An impervious electric cable for use in aggressive environments and at high temperatures comprising an external coating composed of a longitudinally welded tube formed around the electric conductor(s) which have been coated by a dielectric composed by a mineral fibre or any other material resistant to high temperatures.

## European Patent Office

### EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | GB - A - 2 035 666 (PIRELLI S.A. COMPANHIA INDUSTRIAL BRASILEIRA) <br> * Claims 1,4,8; page 1, lines 101-126 * | 1 | H 01 B 7/28 <br> 7/34 |
| X | FR - A - 1 562 741 (CERRO CORP.) <br> * Abstract 1,4; page 1, lines 21-26 and lines 35-40; page 4, lines 5-12; figure 5 * | 1 | |
| X | US - A - 4 154 976 (WILLIAM J. BROREIN) <br> * Claims 1,2,5,6; column 1, lines 24-31; column 2, lines 17 - column 3, line 20; figures 1,2 * | 1 | **TECHNICAL FIELDS SEARCHED (Int.Cl. 3)** <br><br> H 01 B 7/28 <br> 7/34 |
| A | US - A - 3 325 589 (R.C. MILDNER) <br> * Claims 1,7; column 3, lines 10-30, lines 52-55 * | 1 | |
| A | US - A - 3 679 812 (NEVYL OWENS) <br> -- -- | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search <br> The Hague | Date of completion of the search <br> 27-01-1982 | Examiner <br> PIELKA |
|---|---|---|

EPO Form 1503.1  06.78